# EUROPÄISCHE PATENTSCHRIFT

(11) **EP 1 932 246 B1**
(45) Veröffentlichungstag und Bekanntmachung des Hinweises auf die Patenterteilung: **11.08.2010**
(21) Anmeldenummer: 06805934.4
(22) Anmeldetag: 28.09.2006
(51) Int. Cl.: H04B 1/56

(54) **SENDE-EMPFANGSSCHALTUNG FÜR ÜBERLAPPENDE EMPFANGS- UND SENDE-BÄNDER**
TRANSMITTING-RECEIVING CIRCUIT FOR OVERLAPPING TRANSMITTING AND RECEIVING CHANNELS
CIRCUIT D'EMISSION-RECEPTION POUR CANAUX DE RECEPTION ET CANAUX D'EMISSION SE CHEVAUCHANT

(30) Priorität: 06.10.2005 DE 102005047973
(43) Veröffentlichungstag der Anmeldung: 18.06.2008
(73) Patentinhaber: Kathrein-Austria Ges.M.B.H., 6330 Kufstein (AT)
(72) Erfinder: WOLFSBERGER, Klaus, 6380 St. Johann/Tirol (AT)
(74) Vertreter: Flach, Dieter Rolf Paul
(86) Internationale Anmeldenummer: PCT/EP2006/009445
(87) Internationale Veröffentlichungsnummer: WO 2007/039229

(56) Entgegenhaltungen:
- US-A- 5 659 322
- US-A1- 2004 180 633
- US-B1- 6 507 728

## Beschreibung

Die Erfindung betrifft eine Sende-Empfangsschaltung für überlappende Empfangs- und Sende-Bänder nach dem Oberbegriff des Anspruches 1.

Sende-Empfangsschaltung für überlappende Empfangs- und Sende-Bänder werden beispielsweise auf dem Gebiet der RFID-Technik benötigt. Bei RFID-System handelt es sich bekanntermaßen um "Radio-Frequenz-Indentifikations-Systeme". Mittels dieser RFID-Technologie kann in vielen Bereichen ein permanenter und jederzeit aktueller Überblick beispielsweise über den Status oder den Standort unterschiedlichster Gegenstände hergestellt werden. Beispielsweise kann in Archivsystemen, Lagerbeständen, in Kauf- oder Warenhäusern etc. stets überprüft werden, wo sich bestimmte Güter befinden, noch vorhanden sind oder nicht vorhanden sind etc.. Dazu werden sogenannte RFID-Tags verwendet, die mittlerweile kostengünstig herstellbar sind und mit hoher Geschwindigkeit und Speicherkapazität bei der Identifizierung der Produkte herangezogen werden können.

Zum entsprechenden Abfragen und Auslesen, welches kontaktlos erfolgt, werden Sende-Empfangseinheiten verwendet, die technisch bedingt im gleichen Frequenzbereich arbeiten.

Dadurch kommt es bekanntermaßen zu Rückkoppeleffekten, die die Effizienz der sogenannten "Reader" beeinträchtigen, also jener Produkte, die zum Lesen und Schreiben für eine Vielzahl von RFID-Tags geeignet sind.

Bekannte Reader sind dabei so aufgebaut, dass sie zumindest drei Anschlüsse oder Schnittstellen aufweisen, nämlich einen Sendereingang, einen Empfängerausgang sowie einen Antennenanschluss. Über den Sendereingang werden der Sende-Empfangsschaltung Sendesignale zugeführt, die über die Antenne abgestrahlt werden. Umgekehrt werden über die Antenne Signale empfangen, die über die Empfängerschnittstelle der nachgeordneten Readereinheit übermittelt werden.

Dazu wird in der Regel eine 3-Tor-Schaltung verwendet, so dass die über die Senderschnittstelle zugeführten Signale nur zum Antennenanschluss zur Weiterleitung an die Antenne ausgekoppelt werden und umgekehrt die über die Antenne eingekoppelten und empfangenen Signale über die 3-Tor-Schaltung nur an den Empfängeranschluss weitergegeben werden können. Allerdings kommt es dabei durchaus noch in einem gewissen Restmaß zu einem Übersprechen der Sendesignale auf den Empfangszweig.

Von daher ist bereits schon vorgeschlagen worden, eine Bypassleitung zwischen dem Empfangs- und Sendezweig unter Umgehung der 3-Tor-Schaltung vorzusehen, in welcher ein Abstimmelement zwischengeschaltet ist. Durch dieses Abstimmelement soll sichergestellt werden, dass im Falle eines überspringenden relevanten Anteils des Sendesignals auf den Empfangszweig eine Auslöschung oder Unterdrückung dieser unerwünschten Sendesignale gewährleistet wird. Allerdings erfordert dies stets ein Nachführen oder Einstellen auf eine bestimmte Frequenz, wobei von daher eine derartige Technik nur für eine bestimmte Frequenz optimal arbeitet, also höchst schmalbandig ist.

Aufgabe der vorliegenden Erfindung ist es von daher, ausgehend von dem vorstehend genannten gattungsbildenden Stand der Technik, eine verbesserte Sende-Empfangsschaltung für überlappende Empfangs- und Sendesignale zu schaffen, die vor allem breitbandig arbeitet.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Mit der vorliegenden Erfindung wird eine deutlich verbesserte Unterdrückung des Übersprechens von dem Sendeeingang zugeführten Signalen auf den Empfangszweig erzielt. Dabei ist auch keine Regelung mehr notwendig, da die erfindungsgemäße Lösung breitbandig ist. Mit anderen Worten wird im Rahmen der Erfindung eine breitbandige Unterdrückung erzielt, die für verschiedene Frequenzen gleichermaßen wirksam ist.

Zudem ist der erfindungsgemäße Aufbau einfacher als bei einer nachgeregelten Sende-Empfangsschaltung nach dem Stand der Technik.

Die erfindungsgemäße Lösung umfasst im wesentlichen einen Aufbau, bei welchem zwischen dem Sende- und dem Empfangsanschluss jeweils eine Aufspaltung in zwei Leitungszweige erfolgt. In jedem Leitungszweig ist ein separater Zirkulator angeordnet, so dass von den beiden Zirkulatoren zwei Leitungen zu zwei oder über eine Zusammenschaltung zu einer gemeinsamen Antenne führen und die beiden weiteren Ausgänge der beiden Zirkulatoren über eine Zusammenschaltung mit der Empfängerschnittstelle verbunden sind.

Die erfindungsgemäße Verbesserung lässt sich dadurch erzielen, dass in dem einen Sendezweig vor dem Tor der 3-Tor-Schaltung eine 90°-Phasenverschiebung und in dem nachfolgenden Abschnitt zwischen dem Ausgang der 3-Tor-Schaltung und dem nachgeordneten Empfänger eine nochmalige 90°-Phasenverschiebung des Signals bewirkt wird. Eine weitere 90°-Phasenverschiebung wird zwischen dem im anderen Zweig vorgesehenen 3-Tor, nämlich dem zur Antenne führenden 3-Tor und der nachgeschalteten Antenne bewirkt. Dies hat zur Folge, dass die über die Senderschnittstelle der Antenne auf den beiden Signalwegen zugeführten Sendesignale wiederum gleichphasig vorliegen (nämlich mit einer 90°-Verschiebung in beiden Zweigen), und dass umgekehrt bei einem von der Antenne empfangenen Signal dieses Signal auch an der Empfängerschnittstelle nach Durchlaufen beider Zweige mit einer Phasenverschiebung von 90° anliegt. Allerdings würde ein vom Sendeanschluss zum Empfangsanschluss überspringendes Signal in einem Zweig eine 180'-Phasenverschiebung, nämlich zwei aufeinander folgende 90°-Phasenverschiebungen erfahren, wohingegen auf der anderen vom Sender zum Empfänger führenden Zweigleitung keine Phasenverschiebung durchgeführt wird. Somit liegen die an der Empfängerseite wieder zusammengeführten Signale mit 180°-Phasenverschiebung in beiden Zweigen vor und löschen sich aus.

Von daher wird der erfindungsgemäße Effekt vor allem dann erzielt, wenn das empfängerseitige Signal in leistungsgleiche Teile aufgespalten wird.

Bevorzugt werden die über die beiden 3-Tor-Schaltungen in Richtung Antenne ausgekoppelten Signale über eine Zusammenschaltung einer gemeinsamen Antenne zugeführt. Möglich wäre aber auch, dass die beiden entsprechenden über die beiden 3-Tor-Schaltungen ausgekoppelten Signale zwei getrennten Antennen zugeführt werden, da auch in diesem Fall die Abstrahlung gleichphasig erfolgt.

Eine Sende-Empfangsschaltung mit einer 3-Tor-Schaltung ist grundsätzlich zwar auch aus der US 2004/0180633 A1 bekannt geworden. Diese Antenne ist über einen Duplexer mit einem Empfangszweig sowie mit einem Sendezweig verbunden. Gemäß dieser Vorveröffentlichung sind, wie erwähnt, 3-Tor-Schaltungen vorgesehen, wobei der Sendeeingang mit einem ersten Tor der 3-Tor-Schaltung, das zweite Tor dieser 3-Tor-Schaltung mit einer Antenne und das dritte Tor dieser Schaltung mit einem Empfangsausgang verbunden ist.

In dieser Vorveröffentlichung ist aber bereits einleitend festgehalten, dass es sich bei dieser Antennenanordnung um eine Antenne handelt, die in einem ersten Frequenzband sendet und in einem davon unterschiedlichen zweiten Frequenzband empfängt.

Somit handelt es sich bei diesem Stand der Technik um ein anderes Antennensystem mit unterschiedlicher Aufgaben- und Problemstellung zur vorliegenden Sende-Empfangsschaltung, die für überlappende Empfangs- und Sendebänder vorgesehen ist. Derartige, sich überlappende Sende- und Empfangsbänder werden üblicherweise beispielsweise bei RFID-Systemen eingesetzt, um sogenannte Tags auszulesen.

Schließlich wird auch noch auf die US 5 659 322 A verwiesen, die allerdings einen anderen Stand der Technik beschreibt. Denn die aus dieser Vorveröffentlichung bekannte Antenne ist für eine Radar-Anlage konzipiert und angepasst. Bei einer Radar-Anlage handelt es sich hinsichtlich des Frequenzbandes zwar ähnlich wie beim Anmeldungsgegenstand um eine Sende- und Empfangsschaltung mit einer frequenzmäßigen Überlappung des Sende- und Empfangssignals. Allerdings besteht ein wesentlicher Unterschied zwischen einer Radar-Anlage und der vorliegenden Sende-Empfangsschaltung darin, dass bei eine Radar-Antenne stets ein zeitlich gebündeltes Signal (Impuls) über die Antenne abgestrahlt und die an den Objekten auftretenden Reflexionen zeitlich vom Sendesignal getrennt empfangen und ausgewertet werden.

Demgegenüber betrifft die vorliegende Sende-Empfangsschaltung ein System, bei welchem auch in zeitlicher Hinsicht eine überlappende Sende- und Empfangstätigkeit stattfindet, wie dies die typische Situation bei RFID-Antennen ist.

Weitere Vorteile, Einzelheiten und Merkmale der Erfindung ergeben sich aus dem nachfolgend dargestellten Ausführungsbeispiel unter Bezugnahme auf eine Figur.

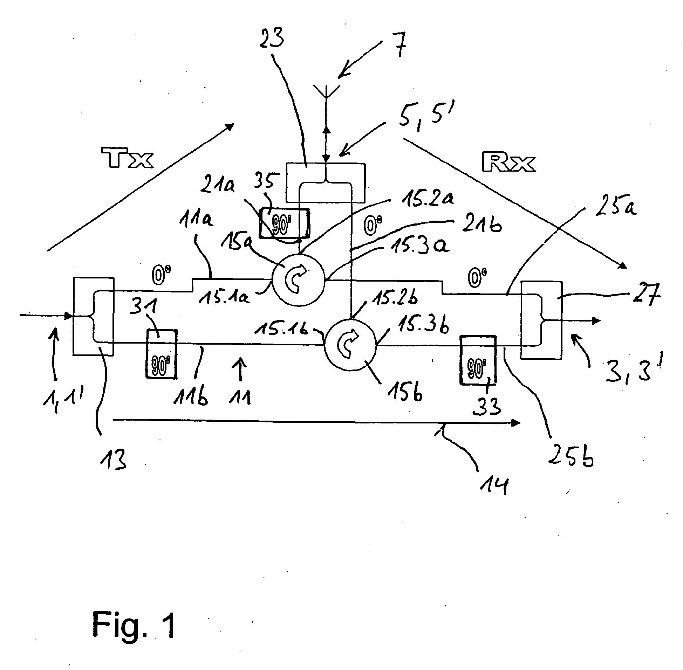

In der beigefügten Figur ist eine Sende-Empfangsschaltung für überlappende Empfangs- und Sende-Bänder gezeigt, die kurz auch als Sende-Empfangsschaltung für überlappende Rx- und Tx-Bänder bezeichnet wird.

Da die erläuterte Sende-Empfangsschaltung bevorzugt im Rahmen der RFID-Technik eingesetzt werden soll, kommt als Frequenzbereich das UHF-Band in Betracht. Allgemein handelt es sich bei der erfindungsgemäßen Sende-Empfangsschaltung um einen Transceiver mit überlappenden Tx- und Rx-Bändern ohne Zeit- oder Codemultiplex-Verfahrensschritte.

Die Schaltung ist dabei derart aufgebaut, dass sie einen Sendeeingang 1 aufweist, der beispielsweise in Form einer Schnittstelle 1', einer Sendeleitung 1' oder allgemein eines Anschlusses 1' ausgebildet ist, sowie einen Empfangsausgang 3, der ebenfalls wieder nach Art einer Ausgangsleitung 3', einer Schnittstelle 3' oder allgemein in Form eines Anschlusses 3' oder dergleichen ausgebildet sein kann.

Zudem ist ein Antenneneingang/-ausgang 5 vorgesehen, der ebenfalls wieder nach Art einer Antennenleitung, einer Schnittstelle oder allgemein in Form eines sonstigen Anschlusses 5' gestaltet sein kann, worüber die Schaltung mit einer Antenne 7 zum Empfangen von Empfangssignalen Rx und zum Senden von Sendesignalen Tx verbunden ist.

Somit wird also vom Sendeeingang 1 zum Antennenanschluss 5' ein Sendezweig Tx realisiert, wohingegen vom Antennenanschluss 5' zum Empfangsausgang 3' ein Empfangszweig Rx realisiert ist.

Die Schaltung ist nunmehr so aufgebaut, dass zwischen dem Sendeeingang 1 und dem Empfangsausgang 3 der bis zu einer 3-Tor-Schaltung führende Sendepfad 11 in zwei Sendepfade 11a und 11b aufgespalten ist, und zwar über eine Leistungsverzweigungsschaltung 13. Dadurch soll eine bevorzugt leistungsgleiche Aufteilung des Sendesignals auf beide Sendepfade 11a und 11a erfolgt.

Beide Sendepfade 11a und 11b führen jeweils zu einer 3-Tor-Schaltung 15a und 15b.

Ein über die beiden Sendepfade 11a und 11b aufgespaltenes und der 3-Tor-Schaltung 15a und 15b jeweils über den zugehörigen Eingang 15.1a und 15.1b zugeführtes Signal wird über das nachfolgende Tor 15.2a bzw. 15.2b zwei parallel verlaufenden Antennenpfaden 21a und 21b zugeführt, die im gezeigten Ausführungsbeispiel über eine Summenschaltung 23 zusammengefasst der nachgeordneten Antenne 7 zugeführt werden.

Schließlich sind die dritten Ausgänge 15.3a und 15.3b, also das dritte Tor 15.3a und 15.3b der so gebildeten beiden Empfangspfade 25a und 25b mit einer nachfolgenden Summenschaltung 27 verbunden, worüber die Empfangssignale über den erwähnten Empfangsausgang 5 einer gemeinsamen Ableitung zu einem Empfänger zugeführt werden.

Um die verbesserte Übersprechunterdrückung 14 zwischen dem Sendeeingang 1 und dem Empfangsausgang 5 zu gewährleisten, sind nunmehr noch mehrere Einrichtung zur Erzeugung einer Phasenverschiebung vorgesehen.

Eine erste Einrichtung 31 zur Phasenverschiebung, die nachfolgend auch kurz als Phasenverschieber 31 bezeichnet wird, ist in einem der beiden Sendepfade 11 vorgesehen, im gezeigten Ausführungsbeispiel beispielsweise im Sendepfad 11b. In dem nachfolgend von der gleichen 3-Tor-Schaltung 15b ausgehenden Empfangspfad 25 ist eine weitere Einrichtung 33 zur Phasenverschiebung um 90° vorgesehen, die ebenfalls kurz als 90°-Phasenschieber bezeichnet wird.

Schließlich ist aus der Zeichnung auch zu entnehmen, dass in dem ersten Antennenpfad 21a, der von dem Anschluss 15.2a des ersten Zirkulators 15a über die Combiner-Schaltung 23 zur Antenne 7 führt, ebenfalls eine weitere Einrichtung 35 zur Erzielung einer 90°-Phasenverschiebung vorgesehen ist (nachfolgend ebenfalls kurz 90°-Phasenschieber genannt), wohingegen in dem zweiten Antennenzweig 21b keine Phasenverschiebung realisiert ist.

Dadurch wird folgende Funktionsweise realisiert:

Ein über den Sendeeingang 1 der Schaltung zugeführtes Sendesignal wird in zwei leistungsgleiche Signale in die beiden Sendepfade oder -zweige 11a und 11b aufgespalten und jeweils dem ersten Tor 15.1a bzw. 15.1b der beiden 3-Tor-Schaltungen 15a und 15b zugeführt, wobei lediglich in dem zweiten Sendepfad 11b eine 90°-Phasenverschiebung für die Sendesignale bewirkt wird.

Beide bevorzugt leistungsgleiche Teile der Sendesignale werden über die jeweilige 3-Tor-Schaltung 15a und 15b über den Ausgang 15.2a und 15.2b den beiden Antennenpfaden oder -zweigen 21a und 21b zugeführt, wobei auch hier wiederum nur für das in dem einen Antennenpfad 21a übertragene Signal eine 90°-Phasenverschiebung stattfindet, also in jenem Antennenpfad, bei welchem in dem vorhergehenden Sendepfad keine Phasenverschiebung durchgeführt wurde.

Somit haben beide Sendesignalanteile auf beiden Zweigen zwischen dem Sendeeingang 1 (Schnittstelle 1') und der nachgeschalteten Antenne 7 (Schnittstelle 5') eine 90°-Phasenverschiebung erfahren, liegen somit also an der Antenne 7 wieder gleichphasig an.

Ein über die Antenne 7 empfangenes Signal wird auf umgekehrtem Weg von der Antenne 7 kommend über die Verzweigungsschaltung 23 auf die beiden Antennenpfade 21a und 21b aufgespalten, vorzugsweise ebenfalls wieder in zwei Signale mit gleicher oder in etwa gleicher Leistung. Nur in dem ersten Antennepfad 21a erfolgt eine 90°-Phasenverschiebung (dem Weg zwischen der Antenne 7 und den nachgeschalteten Toren 15.2a und 15.2b der beiden 3-Tor-Schaltungen 15a und 15b). Zwischen den Ausgängen 15.3a und 15.3b und der empfängerseitigen Summenschaltung 27 wird ebenfalls nur in dem einen Empfangszweig 25b eine 90°-Phasenverschiebung durchgeführt, und zwar nur in jenem Zweig, bei welchem in dem vorausgegangenen Antennenzweig keine Phasenverschiebung realisiert wurde. Somit liegen am Ausgang der Summenschaltung 27 wiederum beide Anteile der aufgespaltenen Antennen-Empfangssignale gleichphasig vor, nämlich mit einer 90°-Phasenverschiebung, so dass sie problemlos addiert und einem nachgeordneten Empfänger zugeordnet werden können.

Betrachtet man über nunmehr lediglich den Sende- und Empfangszweig längs dem Unterdrückungspfad 14 und die Verhältnisse bzgl. eines unerwünschten Überspringens eines Sendesignals auf den Empfangszweig, lässt sich feststellen, dass das am Sendeeingang 1 aufgespaltene Signal auf dem ersten Signalweg 11a zum ersten Tor 15.1a des ersten Zirkulators 15a und vom dritten Tor 15.3a dieses Zirkulators 15a zu der nachfolgenden Summenschaltung 27 auf dem gesamten Weg keine Phasenverschiebung erfährt, wohingegen das vom Sendeeingang 1 in den anderen Zweig 11b aufgespaltene Signal auf dem ersten Weg bis zur 3-Tor-Schaltung 15b eine erste 90°-Phasenverschiebung und auf dem Weg zwischen dem Ausgang 15.3b und der nachfolgenden Summenschaltung 23 eine nochmalige zweite 90°-Phasenverschiebung erfährt, also insgesamt eine Phasenverschiebung um 180° durchführt. Somit liegt ein senderseitig zugeführtes Signal am Ausgang der beiden Zweige, d.h. in der Summenschaltung 27 mit 180°-Phasenverschiebung vor, so dass sich bei leistungsgleicher Aufspaltung hier eine Signal-Auslöschung ergibt.

Durch diesen Aufbau wird mit einfachen Mitteln eine gegenüber dem Stand der Technik deutlich verbesserte Übersprech-Unterdrückung realisiert.

Die erwähnten Einrichtungen 31, 33 und 35 für die Phasenverschiebung können als separate und diskrete in den einzelnen Zweigen vorgesehene Bauteile realisiert sein. Im Rahmen der Erfindung werden jedoch bevorzugt 3dB-Hybriden eingesetzt, nämlich als Leistungsverzweigungsschaltung 13, als Summenschaltung 27 sowie als sogenannte Combinerschaltung 23 zur Aufspaltung eines empfangenen Antennensignals sowie zur Summierung eines der Antenne 7 zugeführten Sendesignals.

Im gezeigten Ausführungsbeispiel sind die mittleren Tore 15.2a und 15.2b über einer Combinerschaltung 22 zusammengeführt und mit einer gemeinsamen Antenne 7 verbunden. Abweichend dazu können beide Antennenpfade 21a und 21b auch mit zwei getrennten Antennen 7 verbunden sein, worüber sie gemeinsam empfangen oder senden, so dass in diesem Fall auf eine Combinerschaltung 23 verzichtet werden kann.

Aus der Schilderung der Schaltung geht hervor, dass das beste Ergebnis dann erzielt wird, wenn eine leistungsgleiche Aufspaltung der Signale am Sendeeingang 1 und eine leistungsgleiche Aufaddierung der Empfangssignale am Empfangsausgang 5 bewirkt wird. Bei der sogenannten CombinerSchaltung 23, die zur Antenne 7 führt, wird ebenfalls bevorzugt eine leistungsgleiche Zusammenfassung bzw. Aufspaltung des Antennensignals bewirkt. Die erfindungsgemäßen Vorteile lassen sich aber zumindest in noch ausreichendem Maße auch dann realisieren, wenn sich die jeweils aufgespaltenen Leistungsanteile der Signale nicht um mehr als 60%, insbesondere um weniger als 50%, 40%, 30%, 20% und insbesondere um weniger als 10% unterscheiden.

Das erfindungsgemäße Ausführungsbeispiel ist für jenen Fall erläutert worden, dass in den betreffenden Pfaden zum einen eine 90°-Phasenverschiebung und in den jeweils anderen parallelen Pfaden keine Phasenverschiebung (also eine Phasenverschiebung von 0°) durchgeführt wird. Eine Umsetzung der Unterdrückung eines Überspringens vom Sendezum Empfangszweig kann auch dann realisiert werden, wenn in den betreffenden Zweigen jeweils eine Phasenverschiebung um 90° + n x 180° durchgeführt und in den jeweils zweiten parallelen Zweigen dazu eine Phasenverschiebung um n x 180° realisiert wird, wobei n entweder 0, 1, 2, 3 etc. ist.

Schließlich wird abschließend auch noch erwähnt, dass als Zirkulator eine 3-Tor-Schaltung verwendet worden ist. Grundsätzlich könnte aber auch eine n-Tor-Schaltung verwendet werden, wobei im Wesentlichen nur drei Tore entsprechend der geschilderten Wirkungsweise notwendig und von Bedeutung sind.

## Patentansprüche

1. Sende-Empfangsschaltung für überlappende Empfangs- und Sende-Bänder, mit folgenden Merkmalen:
- mit einem Sendeeingang (1, 1'), wobei am Sendeeingang (1, 1') eine Leistungsverzweigungsschaltung (13) vorgesehen ist, worüber ein zugeführtes Sendesignal in zwei leistungsgleiche oder näherungsweise leistungsgleiche Signale aufspaltbar und in zwei Sendepfade (11a, 11b) einspeisbar ist,
- mit einem Empfangsausgang (3, 3'), wobei am Empfangsausgang (3, 3') eine erste Summenschaltung (27) vorgesehen ist, zu der zwei Empfangspfade (25a, 25b) führen, wobei in der ersten Summenschaltung (27) die den beiden Empfangspfaden (25a, 25b) zugeführten Signale addierbar sind,
- mit einem Antennenanschluss (5, 5'),
- es ist entweder eine Antenne (7) vorgesehen, wobei die beiden Antennenpfade (21a, 21b) über eine zweite Summenschaltung (23) mit dieser Antenne (7) verbunden sind, oder es sind zwei Antennen (7) vorgesehen, bei der die eine Antenne (7) mit dem ersten Antennenpfad (21a) und die zweite Antenne (7) mit dem zweiten Antennenpfad (21b) verbunden ist,
- mit einer ersten 3-Tor-Schaltung (15a) und einer zweiten 3-Tor-Schaltung (15b),
- das jeweils erste Tor (15.1a, 15.1b) der beiden 3-Tor-Schaltungen (15a, 15b) ist jeweils mit einem der beiden Sendepfade (11a, 11b) verbunden,
- das jeweils zweite Tor (15.2a, 15.2b) der beiden 3-Tor-Schaltungen (15a, 15b) ist jeweils mit einem der beiden parallelen Antennenpfade (21a, 21b) verbunden,
- das jeweils dritte Tor (15.3a, 15.3b) der beiden 3-Tor-Schaltungen (15a, 15b) ist mit den beiden parallelen Empfangspfaden (25a, 25b) verbunden,
- lediglich in einem der Sendepfade (11b), lediglich in einem der Antennenpfade (21a) und lediglich in einem der Empfangspfade (25b) ist jeweils eine Einrichtung (31, 33, 35) zur Durchführung einer ersten Phasenverschiebung um 90° + n x 180° vorgesehen, wobei in dem jeweils anderen Sendepfad (11a), dem anderen Antennenpfad (21b) und dem anderen Empfangspfad (25a) eine zweite Phasenverschiebung um n x 180° vorgesehen ist,
- die erste Phasenverschiebung um 90° + n x 180° ist in dem Sendepfad (11b) und in dem Empfangspfad (25b) vorgesehen, die über dieselbe 3-Tor-Schaltung (15b) verbunden sind,
- die Phasenverschiebung um 90° + n x 180° ist in jenem Antennenpfad (21a) vorgesehen, der über die 3-Tor-Schaltung (15a) mit jenem Sendepfad (11a) und jenem nachfolgenden Empfangspfad (25a) verbunden ist, in dem eine Phasenverschiebung um n x 180' vorgesehen ist, und
- wobei n eine natürliche ganze Zahl einschließlich "0" ist,
**gekennzeichnet durch** die folgenden weiteren Merkmale:
- die 3-Tor-Schaltungen (15a, 15b) sind in Form von Zirkulatoren aufgebaut,
- es sind Einrichtungen (31, 33, 35) zur Durchführung einer Phasenverschiebung in der Leistungsverzweigungsschaltung (13) und/oder in der ersten Summenschaltung (27) und/oder in der zweiten Summenschaltung (23) integriert vorgesehen, und
- die Leistungsverzweigungsschaltung (13), die zweite Summenschaltung (23) und/oder die erste Summenschaltung (27) ist oder sind als 90°-Hybridschaltungen ausgebildet, wodurch in dem einen Sendezweig (11b), dem einen Antennenzweig (21a) und dem einen Empfangszweig (25b) jeweils eine 90°-Phasenverschiebung durchgeführt wird.

2. Sende-Empfangsschaltung nach Anspruch 1, **dadurch gekennzeichnet, dass** die Leistungsverzweigungsschaltung (13), die zweite Summenschaltung (23) und/oder die erste Summenschaltung (27) so ausgebildet sind, dass sich die Signalleistung oder Signalintensität in den jeweils beiden Sendepfaden (11a, 11b) und/oder den beiden Antennenpfaden (21a, 21b) und/oder den beiden Empfangspfaden (25a, 25b) um weniger als 50 %, insbesondere weniger als 40%, 30 %, 20 % und vorzugsweise weniger als 10 % unterscheiden.

## Claims

1. Transmit-receive circuit for overlapping receiving and transmitting bands, having the following features:
- having a transmission input (1, 1'), a power branch circuit (13) being provided at the transmission input (1, 1') and enabling a supplied transmission signal to be split into two signals of equal power or approximately equal power and to be fed into two transmission paths (11 a, 11 b),
- having a reception output (3, 3'), a first summing circuit (27), to which the two reception paths (25a, 25b) lead, being provided at the reception output (3, 3'), it being possible to add the signals fed into the two reception paths (25a, 25b) in the first summing circuit (27),
- having an antenna terminal (5, 5'),
- either one antenna (7) is provided, the two antenna paths (21 a, 21 b) being connected to this antenna (7) by a second summing circuit (23), or two antennae (7) are provided, one antenna (7) being connected to the first antenna path (21 a) and the second antenna (7) being connected to the second antenna path (21 b),
- having a first 3-gate circuit (15a) and a second 3-gate circuit (15b),
- the respective first gate (15.1 a, 15.1 b) of the two 3-gate circuits (15a, 15b) is in each case connected to one of the two transmission paths (11 a, 11 b),
- the respective second gate (15.2a, 15.2b) of the two 3-gate circuits (15a, 15b) is in each case connected to one of the two parallel antenna paths (21 a, 21 b),
- the respective third gate (15.3a, 15.3b) of the two 3-gate circuits (15a, 15b) is connected to the two parallel reception paths (25a, 25b),
- a device (31, 33, 35) for carrying out a first phase shift by 90° + n × 180° is provided in each case in only one of the transmission paths (11 b), in only one of the antenna paths (21a) and in only one of the reception paths (25b), a second phase shift by n x 180° being provided in the other transmission path (11a), the other antenna path (21 b) and the other reception path (25a) respectively,
- the first phase shift by 90° + n × 180° is provided in the transmission path (11 b) and the reception path (25b) which are connected by the same 3-gate circuit (15b),
- the phase shift by 90° + n × 180° is provided in the antenna path (21 a) that is connected by the 3-gate circuit (15a) to the transmission path (11a) and the subsequent reception path (25a) in which a phase shift by n × 180° is provided, and
- in which n is a natural integer including "0",
**characterised by** the following further features:
- the 3-gate circuits (15a, 15b) are constructed in the form of circulators,
- devices (31, 33, 35) for carrying out a phase shift are integrated into the power branch circuit (13) and/or into the first summing circuit (27) and/or into the second summing circuit (23), and
- the power branch circuit (13), the second summing circuit (23) and/or the first summing circuit (27) is or are formed as 90°-hybrid integrated circuits, by means of which a 90° phase shift is carried out in each case in one of the transmission branches (11b), one of the antenna branches (21 a) and one of the reception branches (25b).

2. Transmit-receive circuit according to claim 1, **characterised in that** the power branch circuit (13), the second summing circuit (23) and/or the first summing circuit (27) are configured in such a way that the signal power or signal intensity differs by less than 50 %, in particular less than 40 %, 30 %, 20 % and preferably less than 10 %, in each of the two transmission paths (11 a, 11 b) and/or the two antenna paths (21 a, 21 b) and/or the two reception paths (25a, 25b).

## Revendications

1. Circuit d'émission/réception pour des bandes de réception et d'émission qui se chevauchent, avec les éléments suivants :
- une entrée d'émission (1, 1'), avec un circuit de ramification de puissance (13) prévu à l'entrée d'émission (1, 1') via lequel un signal d'émission amené peut être scindé en deux signaux de même puissance ou approximativement de même puissance et peut être injecté dans deux canaux d'émission (11a, 11b),
- une sortie de réception (3, 3'), avec un premier circuit de sommation (27) prévu à la sortie de réception (3, 3'), vers laquelle mènent deux canaux de réception (25a, 25b), de sorte que les signaux amenés aux deux canaux de réception (25a, 25b) peuvent être additionnés dans le premier circuit de sommation (27),
- un raccord d'antenne (5, 5'),
- il est prévu soit une antenne (7) et les deux canaux d'antenne (21 a, 21 b) sont connectés à cette antenne (7) via un second circuit de sommation (23), soit deux antennes (7) de sorte que l'une des antennes (7) est connectée au premier canal d'antenne (21a) et la seconde antenne (7) est connectée au second canal d'antenne (21 b),
- un premier circuit à trois voies (15a) et un second circuit à trois voies (15b),
- la première voie respective (15.1a, 15.1 b) des deux circuits à trois voies (15a, 15b) est respectivement connectée à l'un des deux canaux d'émission (11a, 11b),
- la seconde voie respective (15.2a, 15.2b) des deux circuits à trois voies (15a, 15b) est respectivement connectée à l'un des deux canaux d'antenne parallèles (21 a, 21b),
- la troisième voie respective (15.3a, 15.3b) des deux circuits à trois voies (15a, 15b) est connectée aux deux canaux de réception parallèles (25a, 25b),
- uniquement dans l'un des canaux d'émission (11b), uniquement dans l'un des canaux d'antenne (21a), et uniquement dans l'un des canaux de réception (25b), il est prévu un système respectif (31, 33, 35) pour exécuter un premier décalage de phase de 90° + n x 180°, alors que dans l'autre canal d'émission (11a), dans l'autre canal d'antenne (21b) et dans l'autre canal de réception (25a) respectif il est prévu un second décalage de phase de n x 180°,
- le premier décalage de phase de 90° + n x 180° est prévu dans le canal d'émission (11b) et dans le canal de réception (25b) qui sont reliés via le même circuit à trois voies (15b),
- le décalage de phase de 90° + n x 180° est prévu dans celui des canaux d'antenne (21a) qui est relié via le circuit à trois voies (15a) à celui des canaux d'émission (11a) et celui des canaux de réception (25a) successif dans lequel est prévu un décalage de phase de n x 180°, et
- n est un entier naturel, y compris "0",
**caractérisé par** les autres caractéristiques suivantes :
- les circuits à trois voies (15a, 15b) sont réalisés sous la forme de circulateurs,
- il est prévu des systèmes (31, 33, 35) pour exécuter un décalage de phase, intégrés dans le circuit de ramification de puissance (13) et/ou dans le premier circuit de sommation (27) et/ou dans le second circuit de sommation (23), et
- le circuit de ramification de puissance (13), le second circuit de sommation (23) et/ou le premier circuit de sommation (27) est ou sont réalisé(s) sous forme de circuit(s) hybride(s) à 90°, de sorte qu'un décalage de phase de 90° est exécuté respectivement dans une ramification d'émission (11b), dans l'une des ramifications d'antenne (21a) et dans l'une des ramifications de réception (25b).

2. Circuit d'émission/réception selon la revendication 1, **caractérisé en ce que** le circuit de ramification de puissance (13), le second circuit de sommation (23) et/ou le premier circuit de sommation (27) sont ainsi réalisés que la puissance ou l'intensité du signal dans les deux canaux d'émission (11a, 11b) et/ou dans les deux canaux d'antenne (21a, 21 b) et/ou dans les deux canaux de réception (25a, 25b) respectifs diffère de moins de 50 %, en particulier de moins de 40 %, 30 %, 20 %, et de préférence moins de 10 %.
